# DEMANDE DE BREVET EUROPEEN

(11) **EP 1 143 726 A1**
(43) Date de publication de la demande: **10.10.2001**
(21) Numéro de dépôt: 01400475.8
(22) Date de dépôt: 22.02.2001
(51) Int. Cl.: H04N 7/14

(54) **Dispositif de réception de signaux de télévision et de visioconférence**

(30) Priorité: 25.02.2000 FR 0002432
(71) Demandeur: SAGEM S.A., 75116 Paris (FR)
(72) Inventeur: Meulle, M. Philippe, 78300 Poissy (FR)
(74) Mandataire: Schmit, Christian Norbert Marie

(57) **Abrégé**

L'invention concerne un dispositif (100) de réception de signaux de télévision, équipé d'une caméra (115), qui intègre les différents éléments nécessaires à l'établissement d'une communication par visioconférence.

En outre, le dispositif comprend des moyens pour pouvoir facilement passer de la visualisation d'une émission de télévision à une communication par visioconférence, l'ensemble des opérations nécessaires pouvant être accomplies depuis une télécommande.

## Description

La présente invention a pour objet un dispositif de réception de signaux de télévision capable de recevoir et d'afficher des images de visioconférence. Par signaux de télévision, ou télévisuels, on désigne l'ensemble des signaux qui peuvent être émis par un opérateur de télévision ou transmis par un appareil de lecture de supports vidéo. Le dispositif selon l'invention peut être tout aussi bien intégré dans un décodeur, dans un téléviseur, dans un magnétoscope ou dans tout autre appareil susceptible de recevoir les signaux de télévision.

D'une façon générale, le domaine de l'invention est celui de la télévision, qu'elle soit analogique ou numérique. L'invention s'inscrit dans le cadre d'une synergie entre deux domaines qui sont distincts du fait des supports de communication qu'ils utilisent, à savoir le domaine de la télévision et le domaine de la visioconférence. Elle a pour but d'offrir un support visuel qui permet de passer, sur un même écran de télévision, de façon très simple de la visualisation d'une émission de télévision à la visualisation d'un interlocuteur avec lequel on communique par visioconférence.

Les techniques de la visioconférence sont connues dans l'état de la technique. La visioconférence permet à deux personnes de communiquer au moyen d'un appareil appelé visiophone qui permet la visualisation de son interlocuteur sur des moyens d'affichage du type écran de télévision. A cet effet, chaque visiophone doit comporter un dispositif comprenant notamment une caméra dotée d'un microphone. L'ensemble des signaux produits par la caméra et le microphone sont transmis à l'interlocuteur distant sous forme de signaux téléphoniques via un réseau téléphonique câblé (RTC), via une liaison téléphonique du type RNIS (Réseau Numérique à Intégration de Services) ou via tout autre type de support point à point. Tous les signaux susceptibles d'être transmis par ces moyens seront désignés dans la suite de la description par le terme générique de signaux téléphoniques. Les normes spécifiant la visioconférence prévoient un débit minimum de 64 kilobits par seconde, ce qui permet d'obtenir une image de qualité correcte même si la fluidité des mouvements n'est pas assurée. En définitive, un visiophone peut être considéré comme un appareil de communication incorporant un dispositif de visualisation et un système téléphonique qui permet d'afficher une image provenant d'un interlocuteur distant.

Un visiophone constitue donc aujourd'hui un équipement spécifique composé notamment d'un élément d'affichage spécifique, qui nécessite par ailleurs l'utilisation d'un téléphone pour composer le numéro de l'interlocuteur avec lequel on souhaite établir une communication par visioconférence. Un dispositif de visioconférence est donc par définition encombrant. Il n'existe pas, par exemple, de systèmes disposant simultanément d'applications dédiées à la réception de signaux télévisuels et à la visioconférence, qui permettent une commutation simple entre ces deux applications.

Le dispositif selon l'invention permet d'intégrer les différents éléments nécessaires à l'établissement d'une communication par visioconférence dans un dispositif du type décodeur ou téléviseur. En particulier, c'est l'écran de télévision qui est utilisé pour afficher le correspondant d'une session de visioconférence. En outre, l'invention met en oeuvre des moyens pour pouvoir facilement passer de la visualisation d'une émission de télévision à une communication par visioconférence. Le dispositif selon l'invention met par ailleurs en oeuvre des moyens pour que la communication de visioconférence soit établie de façon simple et rapide. Par ailleurs, l'utilisateur a le choix entre répondre favorablement à une tentative d'établissement de communication et ne pas répondre à cette tentative; dans le deuxième cas, un interlocuteur distant a la possibilité de laisser un message filmé dans le dispositif de réception de l'utilisateur.

L'invention a donc pour objet un dispositif de réception de signaux télévisuels comportant
- des moyens d'affichage desdits signaux télévisuels ;
- une caméra équipée d'un microphone ;
- des moyens de communication pour échanger, avec un interlocuteur distant possédant un dispositif semblable, sous forme de signaux téléphoniques, des signaux générés par la caméra équipée du microphone ;
caractérisé en ce qu'il comporte :
- un circuit logique pour transmettre vers les moyens d'affichage soit les signaux télévisuels, soit les signaux générés par la caméra équipée du microphone de l'interlocuteur distant ;
- des moyens d'avertissement pour indiquer une tentative d'établissement de communication visiophonique de la part d'un interlocuteur distant ;
- un module de mémoire pour mémoriser une séquence vidéo de l'interlocuteur distant lorsque la communication n'est pas établie, les données mémorisées étant préalablement compressées;
- des moyens pour intervenir simplement sur le circuit logique pour pouvoir répondre favorablement à une tentative d'établissement de communication.

En outre, le dispositif de réception delon l'invention peut comporter des moyens pour lire les données contenues dans le module de mémoire, et un module de décompression et un module de compression pour respectivement recevoir des signaux les signaux issus des moyens de communication et pour transmettre des signaux vers les moyens de communication .

Selon un mode de réalisation de l'invention, le dispositif de réception de signaux télévisuels comporte des moyens pour ouvrir une fenêtre graphique sur les moyens d'affichage afin de faire apparaître une liste d'interlocuteurs potentiels, et des moyens pour sélectionner le dit interlocuteur. Par ailleurs, le dispositif peut comprendre des moyens pour composer automatiquement un numéro de téléphone approprié pour établir une communication afin d'échanger avec le dit interlocuteur les signaux générés par la caméra équipée d'un microphone. Dans un mode de réalisation perfectionné de l'invention, le dispositif selon l'invention comprend des moyens de réception et d'interprétation des signaux émis depuis une télécommande suite à une action d'un utilisateur sur la télécommande pour établir automatiquement une communication par visiophone, dite communication visiophonique, avec l'interlocuteur. L'action de l'utilisateur peut par exemple consister en la composition sur la télécommande d'un numéro de téléphone de l'interlocuteur. De plus, le dispositif selon l'invention peut comporter des moyens pour mémoriser les signaux générés par la camera équipée d'un microphone émis par un interlocuteur, et des moyens pour indiquer qu'un interlocuteur tente d'établir une communication visiophonique. Selon un mode de réalisation particulier, le dispositif selon l'invention comprend des moyens pour se connecter au réseau Internet et transmettre ainsi les données relatives à la communication visiophonique.

L'invention sera mieux comprise à la lecture de la description qui suit et à l'examen de la figure qui l'accompagne. Celle-ci n'est présentée qu'à titre indicatif et nullement limitatif de l'invention.

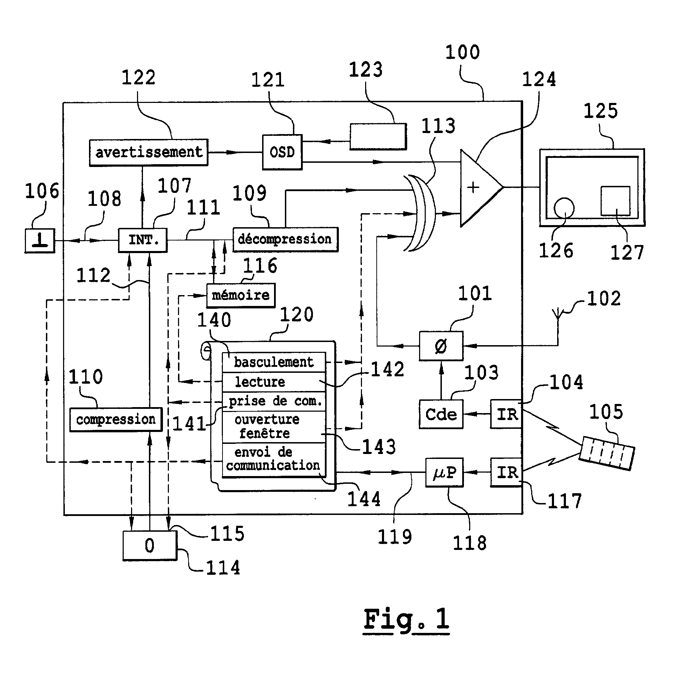

La figure 1 est une représentation simplifiée de la structure interne du dispositif selon l'invention. Sur cette figure, un dispositif 100 de réception de signaux de télévision selon l'invention comporte un module de réception 101 de signaux télévisuels qui reçoit via une antenne 102 un flux d'informations de programmes de télévision. Le module de réception 101 pourrait être également connecté à un réseau de télévision câblée ou à un système de réception par satellite. Par ailleurs, le module de réception 101 est connecté à un circuit de commande 103 du module de réception 101. Le circuit de commande 103 indique au module de réception 101 quel programme de télévision il doit extraire du flux d'informations qu'il reçoit par l'antenne 102. Dans le cadre d'une réception analogique traditionnelle, il s'agit de l'accord d'un oscillateur du module de réception 101 sur la fréquence de la porteuse qui porte les informations du programme de télévision qui doit être extrait.

Un premier capteur 104, dans cet exemple infrarouge, reçoit des signaux émis par une télécommande 105. Une cellule infrarouge du premier capteur 104 délivre un signal qui permet à l'utilisateur de contrôler le circuit de commande 103. Une prise téléphonique 106 est connectée à une interface de communication téléphonique 107 du dispositif 100 au moyen d'une liaison bidirectionnelle 108. L'interface 107 peut comporter un modem, qui est notamment utilisé lorsque les données relatives à la communication visiophonique sont transmises via le réseau Internet. Elle est connectée d'une part à un module de décompression de signaux 109 et à un module de compression de signaux 110 au moyen respectivement de liaisons unidirectionnelles 111 et 112. Les signaux issus du module de décompression 109 et du module de réception 101 arrivent en entrée d'un circuit logique 113 symbolisé par une porte ou exclusif. Le circuit logique 113 a pour vocation de déterminer quel type de signaux il doit laisser passer. Ainsi, ce sont les signaux relatifs à une communication par visioconférence qui sont transmis. Une caméra 114 associée à un microphone 115 est reliée au module de compression 110. Dans la pratique, la caméra est disposée de façon à ce que le téléspectateur lui fasse face lorsqu'il regarde son téléviseur. Un module de mémoire 116 peut recevoir des données depuis l'interface de communication 107 et transmettre des données vers le module de décompression 109 via la liaison 111.

Un deuxième capteur 117, qui est de préférence semblable au premier capteur 104, peut transmettre des signaux à un microprocesseur 118. Le microprocesseur 118 est relié au moyen d'un bus bidirectionnel de communication 119 à une mémoire de programme 120. Une mémoire d'incrustation d'images 121, ou mémoire d'OSD (On Screen Display dans la littérature anglaise) peut être rafraîchie au moyen de données contenues dans un module 122, dit module d'avertissement, ou de données contenues dans une mémoire de sélection 123.

Un module de superposition 124 reçoit à une première entrée les données issues du circuit logique 113, et à une deuxième entrée les données issues de la mémoire d'OSD 121. Le module de superposition 124 permet d'afficher sur l'image de télévision des éléments incrustés du type menu interactif. Les signaux issus du module de superposition 124 sont transmis vers un téléviseur 125 où ils sont transformés en images et en sons.

Dans la pratique, l'ensemble des signaux, qu'il s'agisse de signaux de commande de données ou d'adresse, échangés entre les différents éléments du dispositif selon l'invention, sont véhiculés par un bus bidirectionnel de communication qui permet au microprocesseur 118 de gérer l'ensemble des opérations.

Le fonctionnement du dispositif selon l'invention est à présent expliqué. Deux situations principales sont à envisager. La première situation correspond au cas ou un téléspectateur reçoit un appel d'un interlocuteur distant qui souhaite établir une communication de visioconférence avec lui, et la deuxième situation correspond au cas où le téléspectateur souhaite entamer une communication visiophonique avec un interlocuteur distant.

Dans la première situation, un interlocuteur distant émet des signaux téléphoniques véhiculant des informations d'images et de sons qui ont été générées par une caméra équipée d'un visiophone semblable à celle représentée à la figure 1. Les signaux arrivent via la prise téléphonique 106 et la liaison bidirectionnelle 108 à l'interface de communication téléphonique 107. L'interface 107 transmet alors au module d'avertissement 122 un signal indiquant la tentative d'établissement de communication visiophonique. Une unité de mémoire du module d'avertissement 122 est alors sollicitée pour rafraîchir la mémoire d'OSD 121, de façon à ce qu'une icône 126 caractéristique d'un appel arrivant soit affichée sur l'écran de télévision 125. Dans un mode de réalisation particulier de l'invention, l'icône caractéristique 126 peut être accompagnée du nom de l'interlocuteur qui tente d'établir la communication. A cet effet, des données permettant cette identification doivent être transmises avec l'ensemble des signaux téléphoniques.

Si le téléspectateur ne souhaite pas entamer de communication visiophonique avec l'interlocuteur, ce dernier a la possibilité de laisser dans la mémoire 116 des données correspondant à une séquence vidéo qu'il peut enregistrer au moyen de sa caméra. Par séquence vidéo, il faut comprendre une séquence d'images associée aux signaux sonores correspondants. La séquence vidéo ainsi enregistrée est mémorisée sous forme compressée afin de limiter l'espace mémoire requis.

Si le téléspectateur souhaite répondre favorablement à la tentative d'établissement de communication visiophonique, il active une application 140, dite de basculement, de la mémoire de programme 120, par exemple par une action sur la télécommande 105. Plus précisément, par la pression d'une touche de la télécommande 105, le téléspectateur envoie des signaux infrarouges au capteur 117 qui interprète et transmet ces signaux au microprocesseur 118 qui active l'application de basculement 140. L'application de basculement 140 a pour effet d'intervenir sur le circuit logique 113 afin qu'il laisse passer des signaux qu'il ne laissait pas passer auparavant, et qu'il bloque les signaux qu'il laissait passer auparavant. Ainsi, si le téléspectateur regardait une émission de télévision, c'était le flux d'images vidéo issu du module de réception 101 qui était transmis par le circuit logique 113. L'application de basculement 140 constitue un moyen simple pour passer d'un mode télévisuel à un mode visioconférence et vice-versa. Du point de vue utilisateur, le passage à une communication par visioconférence s'exécute de la même manière qu'un simple changement de chaîne de télévision. L'utilisateur peut ainsi visualiser successivement, c'est à dire l'un après l'autre et selon sa volonté, une chaîne de télévision et une communication par visioconférence. Dans ce cas, la mise en oeuvre de l'application de basculement 140 a alors pour effet de laisser passer et d'afficher les signaux issus du module de décompression 109.

Lorsque le mode visioconférence est activé par la fonction de basculement 140, une application 141 dite de prise de communication réalise automatiquement le transfert de données entre l'interface 107 et le module de décompression 109. Les données transmises sont ainsi transformées en signaux télévisuels. Simultanément, l'application de prise de communication 141 met en marche la caméra autorisant ainsi un transfert de données entre la caméra 114 équipée du microphone 115 vers le module de compression 110. Dans le cas d'une prise de communication par visioconférence, les données reçues par l'interface 107 ne se sont évidemment plus mémorisées dans la mémoire 116. La communication entre l'utilisateur du dispositif selon l'invention et un interlocuteur peut alors se poursuivre, l'interface de communication 107 ayant pour fonction de transmettre vers la prise téléphonique 106 les signaux issus du module de compression 110, et de transmettre vers le module de décompression 109 les signaux issus de la prise téléphonique 106.

Dans le cas où l'utilisateur du dispositif 100 n'a pas souhaité répondre favorablement à la tentative d'établissement de communication par visiophone émise par l'interlocuteur distant, il peut cependant par la suite mettre en oeuvre une fonction lecture 142 de la mémoire de programme 120. Cette fonction lecture permet le transfert des données de la mémoire 116 vers l'unité de décompression 109, et ensuite la restitution du message laissé par l'interlocuteur distant sur l'écran de télévision 125. A cet effet, l'application de basculement 140 est également activée pour passer en mode visiophone.

Lorsque l'utilisateur du dispositif selon l'invention souhaite établir une communication visiophonique avec un interlocuteur distant, il doit tout d'abord procéder à une étape de sélection de cet interlocuteur. A cet effet, le dispositif selon l'invention propose plusieurs solutions : l'utilisateur peut tout d'abord activer une application d'ouverture de fenêtre graphique 143 qui a pour effet de transférer des données contenues dans la mémoire de sélection 123 vers la mémoire d'OSD 121. Une fenêtre graphique 127 apparaît alors sur l'écran de télévision 125. Dans cette fenêtre, un ensemble de noms, que l'utilisateur a préalablement mémorisé dans la mémoire de sélection 123, sont proposés. A l'aide la télécommande 105, l'utilisateur peut sélectionner et valider un nom, par exemple en exerçant une pression sur différentes touches appropriées de la télécommande associées à un correspondant sélectionné. Le signal de la télécommande est alors reçu par le capteur 117 et interprété par le microprocesseur 118 qui peut alors activer une application d'envoi de communication 144. La mémoire de sélection 123 peut également associer une adresse Internet à un correspondant sélectionné. L'ensemble des signaux relatifs à la visioconférence peuvent alors être véhiculés via le réseau Internet.

Dans un autre mode de réalisation de l'invention, au lieu de faire apparaître un menu pour sélectionner le nom de l'interlocuteur, l'utilisateur peut à l'aide de la télécommande 105 exercer une action, consistant par exemple à composer directement le numéro de téléphone de l'interlocuteur. Cette composition se traduit par un ensemble de signaux infrarouges reçus par le capteur 117 et interprétés par le microprocesseur 118. L'information qui en résulte peut être exploitée par l'application d'envoi de communication 144. L'application d'envoi de communication 144 a alors pour effet de composer automatiquement les numéros de téléphone de l'interlocuteur sélectionné et de mettre en oeuvre la caméra associée au microphone 115. L'application de basculement 140 est automatiquement mise en oeuvre par l'application d'envoi de communication 144. L'utilisateur peut alors attendre que l'interlocuteur réponde favorablement à cette tentative d'établissement de communication par visiophone. Si c'est le cas, il verra ce dernier apparaître sur son écran de télévision 125. Si l'interlocuteur distant ne répond pas favorablement, l'utilisateur peut laisser un message dans le dispositif selon l'invention dont l'interlocuteur dispose. Le message laissé correspond à un ensemble de signaux d'images et de sons qui ont été générés par la caméra 114 et par le microphone 115, et qui ont subi une compression dans le module de compression 110.

## Revendications

1. Dispositif (100) de réception de signaux télévisuels comportant :
- des moyens d'affichage (125) desdits signaux télévisuels ;
- une caméra (114) équipée d'un microphone (115) ;
- des moyens de communication (106 ; 107) pour échanger, avec un interlocuteur distant possédant un dispositif semblable, sous forme de signaux téléphoniques, des signaux générés par la caméra équipée du microphone ;
**caractérisé en ce qu'**il comporte
- un circuit logique (113) pour transmettre vers les moyens d'affichage (125) soit les signaux télévisuels, soit les signaux générés par la caméra équipée du microphone de l'interlocuteur distant ;
- des moyens (122) d'avertissement pour indiquer une tentative d'établissement de communication visiophonique de la part d'un interlocuteur distant ;
- un module de mémoire (116) pour mémoriser une séquence vidéo de l'interlocuteur distant lorsque la communication n'est pas établie, les données mémorisées étant préalablement compressées;
- des moyens (140) pour intervenir simplement sur le circuit logique (113) pour pouvoir répondre favorablement à une tentative d'établissement de communication.

2. Dispositif (100) de réception de signaux télévisuels selon la revendication 1 **caractérisé en ce qu'**il comporte des moyens (142) pour lire les données contenues dans le module de mémoire.

3. Dispositif (100) de réception de signaux télévisuels selon l'une des revendications précédentes **caractérisé en ce qu'**il comporte un module de décompression (109) et un module de compression (110) pour respectivement recevoir des signaux les signaux issus des moyens de communication (106 ;107) et pour transmettre des signaux vers les moyens de communication (106 ;107).

4. Dispositif (100) de réception de signaux télévisuels selon l'une des revendications précédentes **caractérisé en ce qu'**il comprend des moyens (143 ;121 ;123) pour ouvrir une fenêtre graphique sur les moyens d'affichage (125) pour faire apparaître une liste d'interlocuteurs potentiels et des moyens (105) pour sélectionner le dit interlocuteur.

5. Dispositif (100) de réception de signaux télévisuels selon la revendication précédente **caractérisé en ce qu'**il comprend des moyens (144) pour composer automatiquement un numéro de téléphone approprié pour établir une communication afin d'échanger avec ledit interlocuteur les signaux générés par la caméra équipée d'un microphone.

6. Dispositif (100) de réception de signaux télévisuels selon la revendication 1 **caractérisé en ce qu'**il comprend des moyens (117 ;118) pour recevoir et interpréter des signaux émis depuis une télécommande (105) suite à une action d'un utilisateur sur la télécommande (105) pour établir automatiquement une communication visiophonique avec un interlocuteur .

7. Dispositif (100) de réception de signaux télévisuels selon la revendication 6 **caractérisé en ce que** l'action de l'utilisateur sur la télécommande consiste en la composition d'un numéro de téléphone de l'interlocuteur.

8. Dispositif (100) de réception de signaux télévisuels selon l'une des revendications précédentes **caractérisé en ce qu'**il comprend des moyens pour se connecter au réseau Internet et transmettre ainsi les signaux générés par la caméra et le microphone de l'interlocuteur distant .

9. Dispositif (100) de réception de signaux télévisuels selon les revendications 4 et 8 **caractérisé en ce que** la liste d'interlocuteurs potentiels comprend une information relative à une adresse Internet d'un correspondant sélectionné.
